Europäisches Patentamt

European Patent Office

Office européen des brevets

(19)

(11) Publication number: **0 154 834 B1**

# (12) EUROPEAN PATENT SPECIFICATION

(45) Date of publication of patent specification: **27.03.91**    (51) Int. Cl.⁵: **F16D  27/16**, F16D 27/06

(21) Application number: **85101657.6**

(22) Date of filing: **15.02.85**

(54) Method and apparatus for controlling electromagnetic couplings.

(30) Priority: **17.02.84 US 581279**
       **17.02.84 US 581108**

(43) Date of publication of application:
       **18.09.85 Bulletin  85/38**

(45) Publication of the grant of the patent:
       **27.03.91 Bulletin  91/13**

(84) Designated Contracting States:
       **DE FR GB IT**

(56) References cited:

| DE-A- 1 178 717 | DE-A- 2 511 564 |
| GB-A- 727 783 | GB-A- 2 010 420 |
| GB-A- 2 067 258 | US-A- 2 808 917 |
| US-A- 3 268 045 | US-A- 3 581 156 |
| US-A- 4 227 230 | US-A- 4 376 476 |

(73) Proprietor: **DANA CORPORATION**
       **4500 Dorr Street**
       **Toledo, OH 43615(US)**

(72) Inventor: **Booth, Dwight E.**
       **County of Rock**
       **Janesville, WI 53545(US)**
       Inventor: **Roll, Thomas P.**
       **1514 Morningside Drive**
       **Janesville, WI 53545(US)**

(74) Representative: **Hoeger, Stellrecht & Partner**
       **Uhlandstrasse 14 c**
       **W-7000 Stuttgart 1(DE)**

EP 0 154 834 B1

## Description

The invention generally relates to a method of controlling energizing of a multiple-turn winding of an electromagnetic coupling according to the preamble of claim 1 and to an apparatus for energizing the multiple-turn winding of an electromagnetic coupling having an armature and a rotor separated by an air gap, for carrying out said method.

More particularly, the invention has to do with controlled excitation of electromagnetic clutches or brakes of the type having two relatively rotatable members separated by an air gap, the engagement of the members being accomplished without undue noise or mechanical shock even despite changes in the gap length due to wear on the two members.

In some commonly known electromagnetic clutch having a stationary magnetic core, a rotor and a relatively rotatable armature, an air gap separates the rotor from the armature when the electromagnet is de-energized. The armature is held away from the rotor by means of leaf springs secured to a pulley assembly which, in turn, is keyed to the shaft about which the clutch rotates. A multiple-turn winding (i.e. clutch coil) is disposed between the magnetic core and the rotor and, when energized, produces magnetic flux which threads a path through the magnetic core, the rotor and the air gap to the armature whereby the armature is drawn toward the rotor. By way of this flux coupling, the armature is moved to close the gap and engage the rotor so the two are coupled by friction and one drives the other without slippage. The coupling torque between the rotor and the armature is dependent in part upon the m.m.f. produced by the coil and the magnetic flux threading the interface between the rotor and the armature.

Typically, when full or rated voltage is applied to an initially de-energized clutch coil (i.e. a step voltage), the current rises exponentially due to the inductance of the coil. In a gap-type electromagnetic clutch, at a predetermined level of current the m.m.f. in the magnetic path becomes sufficient to pull the armature into contact with the rotor against the bias of the springs. At the instant of gap closure (i.e. touching of armature to rotor) the coil current and the m.m.f. may have almost reached the rated or maximum values, but the flux is still rising because the reluctance of the entire flux path falls dramatically as the gap narrows and closes. Because torque transmission between a touching rotor and armature is proportional to the flux crossing the interface, if rated voltage is applied at a first instance to the coil, the armature more or less slams into engagement with the rotor at a later second instant with a slight delay determined by coil inductance and mechanical inertia. But at the second instant, torque transmission between the rotor and armature virtually jumps from zero to the rated value.

Such a jump in torque may cause (i) an undesirably sudden loss in speed of the prime mover supplying input power to the clutch, (ii) undue shock or strain on driving on driven components, including belts or chains, or (iii) unpleasant engagement noise and belt screech. In addition, when the rotor and armature are engaged the inertia of the slower moving of the two (and its load) needs to be overcome before the full torque coupling locks the rotor and armature into synchronized rotation. After touching (i.e. initially after gap closure) and while the rotor's or armature's inertia is being overcome, frictional slippage occurs at the rotor-armature interface due to the existence of the maximum or rated magnetic attraction force; this latter condition often results in alternate slips and holds (i.e. chatter noise and undue wear). This alternating slip-hold vibrating engagement or chatter is sometimes evidenced by a loud audible vibration or "screeching" noise generated at the rotor-armature interface.

Some clutches and brakes have been associated with control units which produce a so-called "soft-start" action. In these, the average coil current and the average m.m.f. are smoothly increased from zero to maximum or rated values. This works satisfactorily for clutches and brakes in which the armature and rotor are not separated by a gap, but instead relatively rub with light contact when the clutch is "disengaged" In this sort of arrangement, slippage gradually decreases, torque gradually increases and "chatter" does not occur. Mechanical shocks on a prime mover and associated components are alleviated when a gapless-type clutch or brake is excited with a smooth ramp to produce a "soft start".

Although a "soft-start" zero-gap clutch utilizing a ramp voltage is an improvement over a clutch initially energized by a step voltage, the problem remains that the ramp-voltage engagement technique when used in connection with a gap-type clutch produces a torque coupling upon initial engagement of the armature to the rotor. This initial torque coupling is sufficient to produce a "screeching" noise resulting from slip-hold vibration as the inertia of the slower moving rotor or armature is being overcome. The "screeching" noise is similar in nature to that resulting from energization of the clutch coil by a step voltage. Also, the sudden torque-coupling engagement of the rotor and armature produced by a ramp voltage energization of the clutch coil may still cause an undesirable change in engine RPM. Therefore there remain problems of noise and sudden load changes which cannot be eliminated for a gap-type clutch energized by only a ramp voltage according to the known soft-start technique. Specifically, when the ramp voltage and its associated current and flux density are great enough to create a force which draws the armature to the rotor they are greater than what is needed to merely hold the armature and rotor in contact and to allow maximum slippage and minimum slip-hold noise (i.e. high-pitched "screech"). Therefore, there is a near instantaneous torque coupling applied to the armature-rotor interface which is less than that associated with a step-voltage energization, but nevertheless sufficient to be characterized by the same problems.

Further, a method and an apparatus of the type indicated at the outset or disclosed in US-A-2 808 917 which teaches the possibility of employing a charge start on a capacitor in order to obtain a high initial starting current for energizing the winding of an electromagnet coupling in order to quickly close the air gap between a rotor and an armature while - following this initial energization - torque transmission through the coupling elements is maintained at a considerably lower energization.

Considering the problems discussed above and proceeding on the basis of the prior art, it is the object of the present invention to provide a method and apparatus for operating a gap-type electromagnetic coupling (clutch or brake) so as to reduce noise, shocks and undue wear associated with engagement of the coupling. More specifically, it is an object to provide a control for exciting a gap-type electromagnetic clutch or brake which reduces (i) the audible chatter at the co-operating friction faces of the engaged members, (ii) screeching caused by the slippage of an endless belt on the output side of the clutch due to sudden rise in torque, and (iii) related wear and tear on the driving and driven components.

Simultaneously, the present invention aims at the provision of a control for energizing a gap-type electromagnetic clutch in a fashion which alleviates noticeable sudden changes in the speed of an associated prime mover.

Regarding the method, the object underlying this invention is accomplished by the method having the characterizing features of claim 1.

Regarding the apparatus, the object underlying this invention is accomplished with the apparatus of claim 4.

Thus, in accordance with the invention a method and apparatus are provided for energizing the multiple-turn winding and associated magnetically permeable flux path of an electromagnetic coupling having two members (e.g. an armature and a rotor) normally separated by an air gap; the energization of the winding is controlled initially (after some stimulating signal calling for engagement) to produce a high average m.m.f. sufficient to pull the two members against the bias of springs and into engagement; but the average coil current and average m.m.f. are thereupon reduced after closure of the air gap separating the two members so as to decrease the torque below that level which would otherwise be transmitted between the two members immediately at the instant of gap closure. Immediately following the reduction in average m.m.f., the energization of the winding is gradually increased until full torque coupling is achieved and the rotor and the armature turn synchronously without slippage. Preferably, the energization of the winding is reduced to a level which produces zero torque coupling and 100% slippage after the armature has been drawn into contact with the rotor. But the coil energization is not reduced to zero, since the reduced level is chosen to prevent the gap from reopening. Further, preferably to control the energization of the winding, an electronic circuit is constructed to include (1) first means responsive to a stimulating signal for initially energizing the winding to create an average m.m.f. which draws the two members into contact, (2) second means responsive to the first means for reducing the average m.m.f. in the flux path of the coupling so as to reduce the torque coupling between the two members, and (3) third means then operative to gradually increase the average m.m.f. in the flux path from the reduced value to a predetermined higher value so as to produce rated torque transmission without relative slippage of the members. By energizing the winding in this manner, a surprising reduction of engagement noise results. In addition, the engagement of the clutch is considerably smoother than that produced by prior art controls and methods since the initial torque coupling between the armature and rotor can, in preferred embodiments, be made near zero; this means that when the gap closes, slippage is essentially 100% and it thereafter decreases progressively to 0%. According to a preferred embodiment the control unit pulses the clutch coil with full voltage for a predetermined time duration known to be sufficient to draw the armature across the gap and into contact with the rotor. At the conclusion of the full voltage pulse, the clutch coil is energized by ramping up the average coil current from an initial value which is affirmatively and markedly reduced from that produced by full voltage energization of the coil. By energizing the clutch coil in this manner the torque coupling at the instant of gap closure is reduced. Specifically, the reduced average current excitation following the full-voltage pulse is chosen so as to produce approximately zero torque coupling and 100% slip at the rotor-armature interface.

With the above control unit some problems may be encountered when one attempts to utilize the same with gap-type clutches or brakes which are not, for reasons of economy, constructed with the "auto-gap" feature disclosed in U.S. Patents 2,705,058 and 2,970,681 and by which the air gap between a disengaged rotor and armature is maintained, through mechanical compensation, essentially constant despite substantial wearing down of the opposed friction surface faces. In non-compensated gap-type magnetic clutches or brakes employed in such environments as automobile accessory drives or the like, the coupling is initially manufactured such that the opposed steel surfaces of the two principal members (e.g. rotor and armature) are separated by a gap of a chosen first width (e.g. 0.533 mm (0.021")) when fully disengaged; but as the coupling is cycled thousands of times over its normal useful life, the surface wears down considerably and the gap, when the surfaces are fully disengaged, will increase to a second, larger width (e.g.0.508 mm (0.200")).

The air gap between an armature and rotor's faces in a magnetic clutch (or brake) forms the highest reluctance portion of the magnetic flux path, and a change of only a few thousandths of an inch in gap width can materially increase the reluctance of the complete flux path whose other portions are formed by permeable steel. Thus, a given magnetic coupling possesses a main gap which becomes wider in the later stages of its useful life than in its earlier stages, and a greater m.m.f. is required in the wider gap case to create sufficient flux to draw the armature across the gap and into contact with the rotor.

It has been the practice of the industry to make the source voltage and parameters of the coil excitation circuit for such clutches create sufficient coil current and m.m.f. to close the gap and engage the co-operating members even when the gap has the widest value to be encountered near the end of the coupling's useful life. But this means that the m.m.f. will really be more than required during the major portion of the coupling's useful life.

According to the embodiments of the invention discussed above, the coil of the coupling would be excited at full source voltage for a predetermined time interval which corresponds to that observed as required for the gap to close when one is controlling an electromagnetic coupling of a given design and size. Normally, one would chose an observed time interval near the end of the coupling's useful life; but if that choice is followed, then control of the same coupling when it is new (and its gap is narrowest) would result in the full excitation of the coil for a significant time span after the gap has closed and before the predetermined time interval ends. Full excitation of the coil after gap closure could thus create alternate slip-and-hold chatter, with the same objectionable noise, mechanical shock and belt screech.

Therefore, the present invention further aims at the provision of a method and an apparatus for energizing a gap-type electromagnetic clutch or brake which reduces the noise and undue wear resulting from chatter upon energization of the clutch or brake coil - despite changes in the width of the opened gap even though the open gap width may change in an unforseeable fashion and, more specifically, at a method and an apparatus which compensate for increases in the width of the opened gap between the rotor and armature resulting from clutch wear over the useful life of the clutch.

In accordance with an especially preferred embodiment of the present invention, a control unit is provided to energize and cause engagement of a gap-type electromagnetic coupling in the basic generic fashion disclosed above, but with a further improvement to prevent high torque and chatter immediately following contact of the two main members (rotor and armature) even if the width of the open gap between such members has changed unforseeably and the time required for gap closure correspondingly changes. This is accomplished by sensing means which sense and signal, at least approximately, the instant in time when the gap becomes fully closed, and by means which cause an abrupt reduction in the average coil excitation and the average m.m.f. in response to the signalling by said sensing means. Thus, there is no need to determine the gap closing time exhibited by a given clutch when initially excited at the chosen high average current and m.m.f. levels. Proper timing of the reduction in exciting current and m.m.f. is automatically achieved to assure that full excitation forces do not continue after the members touch. This assures that slip-and-hold chatter and noise are eliminated or alleviated even more reliably, and in the face of gap-width wear, than by the method and apparatus operating with a predetermined time interval because no predetermined time duration for the initial period of high m.m.f. excitation is required in view of the sensing means.

Further details and advantages of the invention will become apparent from the following detailed description and the accompanying drawings.

FIGURE 1 is a schematic diagram of an accessory drive system for an engine-driver vehicle showing a clutch configuration which allows the accessories to be driven at two speeds;

FIG. 2 is an enlarged side view of the accessory drive system in FIGURE 1 taken along the line 2-2 showing the system's clutch and crankshaft pulleys;

FIG. 3 is a graphic representation of the two speeds of the accessory drive system in relation to the speed of the engine's crankshaft;

FIG. 4 is a cross-sectional view taken along the line 4-4 in FIG. 2 of the two-speed accessory drive clutch;

FIG. 5 is a schematic circuit diagram of a clutch control unit constituting an exemplary embodiment of the invention; and

FIGS. 6a and 6b together show a series of curves illustrating variations in certain voltages, currents, and other variables with time during operation of the circuit in FIG. 5.

FIGS. 7a and 7b are voltage and current waveforms, respectively, for a prior art ramp-voltage energization of an electromagnetic coupling;

FIG. 8 is a schematic diagram of the clutch energization circuit according to one further preferred embodiment of the invention; and

FIGS. 9a and 9b are a timing diagram of the voltage and current waveforms associated with the clutch energization circuit in FIG. 8.

While the invention will be described in some detail with reference to a preferred embodiment, it is to be understood that it is not intended to limit the invention to such detial. On the contrary, it is intended to cover all alternatives, modifications and equivalents which fall within the spirit and scope of the invention as defined by the appended claims.

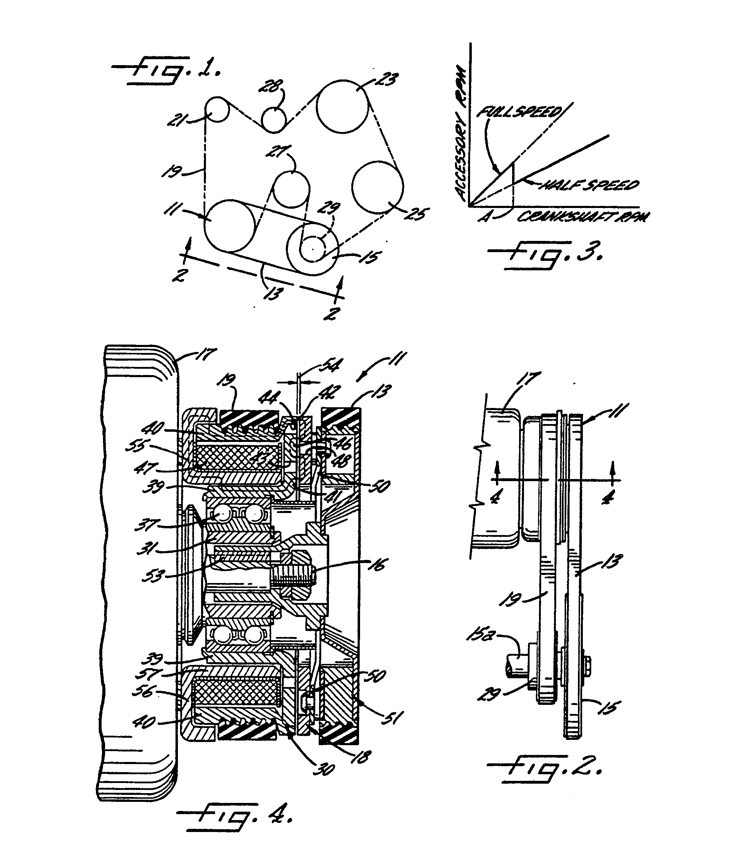

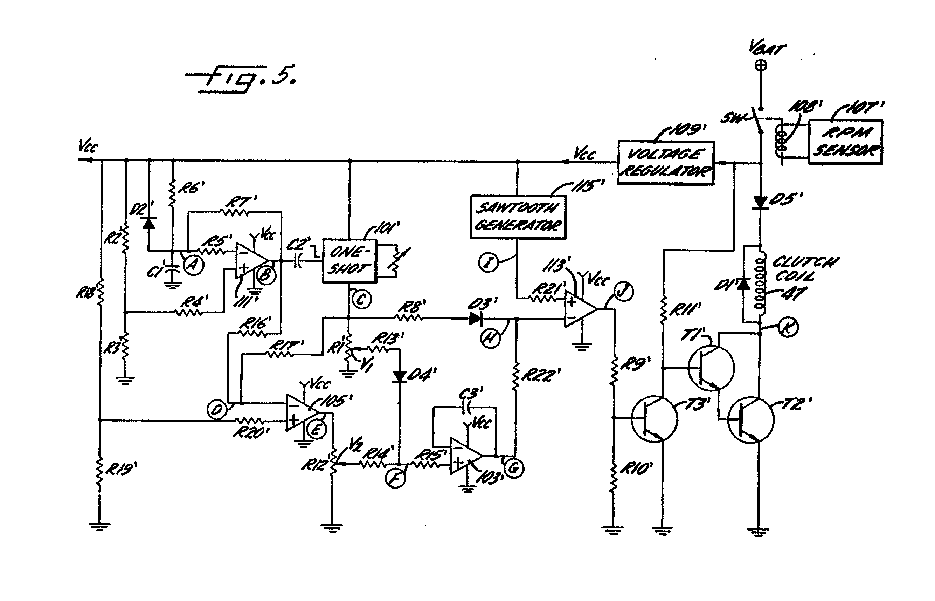

Referring first to FIGURES 1 and 2, accessory drives in automobiles have traditionally utilized a direct-drive configuration with the accessories having a linear speed relation to engine crankshaft speed. In the direct-drive configuration, at high engine speeds the accessories are driven at rotational velocities considerably in excess of those actually required. With increasing concern in recent years about fuel-efficient operation of automobiles, two-speed accessory drives have been developed which in part eliminate excessive rotational speed of accessories. By reducing the speed of the accessories relative to engine speed in the high crankshaft speed range, increased miles-per-gallon performance by the automobile may be realized.

To implement a two-speed accessory drive, the armature side of a two-speed accessory drive clutch 11 (hereinafter TSAD clutch) is connected to the engine's crankshaft pulled 15 by an endless belt 13. The TSAD clutch 11 is mounted over the rotatable shaft 16 of an air pump 17. The circular armature 18 of the TSAD clutch is keyed to the air pump's shaft 16 by way of the armature's pulley. The air pump 17 is an emissions control device which must run at speeds linearly proportional to the engine's speed over the full range of engine speeds. Therefore, the TSAD clutch's circular armature 18 is keyed to the air pump's shaft 16, to provide a direct drive for the air pump 17 from the crankshaft pulley 15 by way of the TSAD clutch's armature 18 and endless belt 13.

In order to drive the automobile's accessories, a second endless belt 19 is trained around pulleys for an alternator 21, an air conditioner 23, a power steering pump 25 and a water pump and fan assembly 27. An idler pulley 28 aids in tensioning the endless belt 19. The endless belt 19 is also trained around a one-way or "overrun" clutch 29 mounted on the crankshaft 15a and the grooved pulley surface of an annular rotor 30 of TSAD clutch 11. Since both the one-way clutch 29 and crankshaft pulley 15 are mounted on an extension of the engine's crankshaft, the one-way clutch 29 is coaxial with the crankshaft pulley 15 but its pulley diameter is approximately one-half of that for the crankshaft pulley.

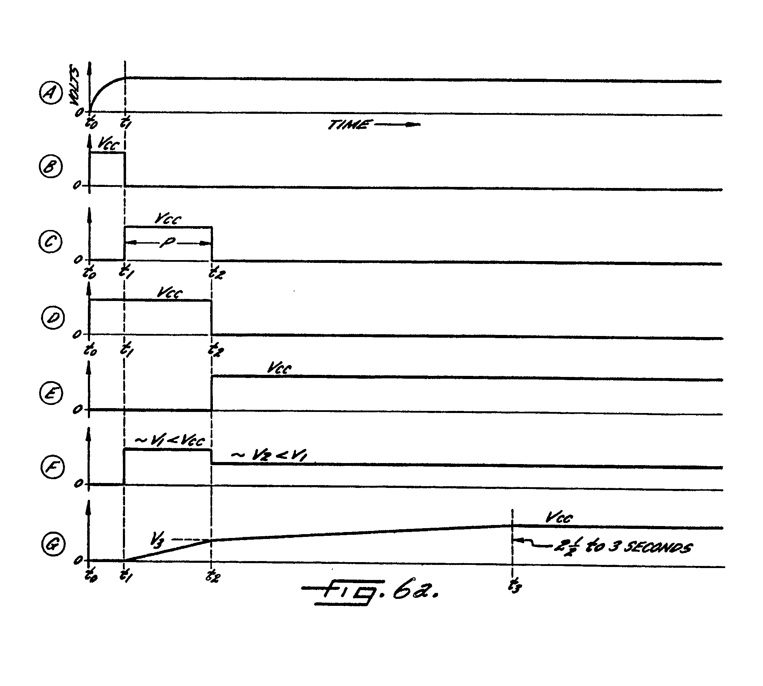

In operation, when the engine is running at speeds below a preselected value A in FIG. 3, the TSAD clutch 11 is engaged so that the rotor 30 and the armature 18 are driven in unison by input from the belt 13. Since the diameter of the rotor 30 of the TSAD clutch is greater than the diameter of the one-way clutch 29, it follows that when the TSAD clutch is engaged, the belt 19 drives the outer component of the one-way clutch faster than the speed of the crankshaft. The one-way clutch is constructed, in known fashion, such that is outer component freely overruns its inner component and the crankshaft 15a in these circumstances. By contrast, at crankshaft speeds greater than a value A, the TSAD clutch 11 is de-energized and the rotor 30 is disengaged from the armature 18. Now the speed of the rotor and the outer component of the one-way clutch 29 tend to be zero or less than crankshaft speed; but because the one-way clutch 29 "engages" it causes the belt 19 to drive the rotor 30 from the crankshaft 15a. Since the one-way clutch 29 has a smaller diameter than the crankshaft pulley 15, the ratio between the accessory and engine speeds are reduced upon de-energization of the TSAD clutch.

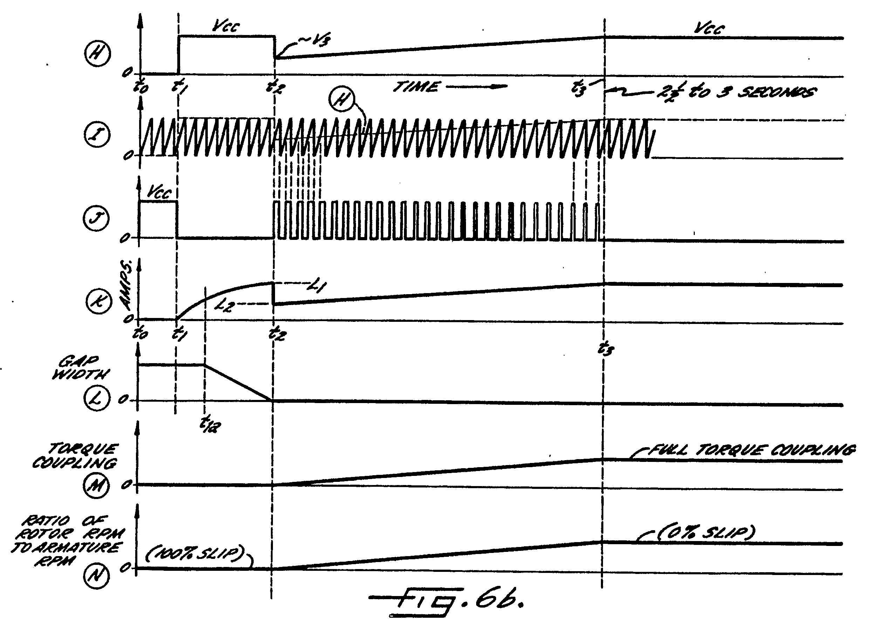

Referring now to FIG. 4, the TSAD clutch or electromagnetic coupling 11 is carried by a tubular nose 31 extending from the housing of the air pump 17 and concentric with the pump shaft 16. The engaging surfaces for the electromagnetic coupling are provided by first and second members 18 and 30, respectively (hereinafter armature 18 and rotor 30 of the TSAD clutch 11). The annular rotor 30 is rotatably journaled on the nose 31 by a ballbearing 37. The rotor 30 is substantially U-shaped in radial cross-section and includes inner and outer concentric pole rings 39 and 40 made of magnetic material, the inner ring being secured to the outer race of the bearing 37. It should be noted that the clutch shown in FIG. 4 is only exemplary of many different well-known electromagnetic couplings which may be utilized with the invention.

Circular pole faces 41 and 42 are defined by the forward ends of the rings 39 and 40, respectively. The pole faces 41 and 42 are magnetically isolated from one another by radially spaced flux gaps 43 and 44; each flux gap is composed of circumferentially spaced arcuate slots. The two sets of slots are physically connected by an intervening ring 46.

A multiple-turn winding 47 (hereinafter referred to as the clutch coil) is stationary between the inner and outer pole rings 39 and 40 of the rotor 30, being fixed by epoxy on a J-shaped support 56 of ferromagnetic steel and suitably attached to the housing of the air pump 17. The support 56 defines an inner pole ring 57 closely spaced by a short radial air gap from the inner surface of the rotor 30. Because the magnetic support 56 does not totally surround the rotor 30, the endless drive belt 19 may be trained directly to the outer grooved surface of the rotor, thus allowing the rotor to function as a pulley.

When excited by a voltage source, the clutch coil 47 produces magnetic flux which engages the TSAD clutch 11 by drawing the armature 18 into engagement with the pole faces 41 and 42 of the rotor 30. The armature 18 is in the form of a circular disk having a flux gap 48 composed of a series of circumferentially spaced arcuate slots similar to those of the rotor's flux gaps 43 and 44.

In order to bias the armature 18 away from the rotor 30 when the clutch coil 47 is de-energized, the armature is connected to a pulley assembly 51 by a set of circumferentially spaced leaf springs 50. The pulley assembly 51 is keyed at 53 to the shaft 16 of the air pump 17 and is continuously driven via the belt 13 from the crankshaft pulley 15. The springs 50 urge the armature 18 to a position in which the armature is spaced from the pole faces 41 and 42 by a narrow axial air gap 54. Upon excitation of the clutch coil 47, magnetic flux threads along a path 55 indicated in dotted line. The slots of the rotor's flux gaps 43 and 44 and the slots of the armature's flux gap 48 direct the flux path to "zig-zag" back and forth across the armature-rotor axial air gap 54 according to a technique known in the art and disclosed in U.S. patent No. 4,160,498. Such a flux 55 causes the armature to be drawn into frictional engagement with the rotor's pole faces 41 and 42. This engagement couples the armature and the rotor for rotation in unison when the magnetic flux and the attractive force become great enough to eliminate slippage.

The flux produced by the clutch coil 47 is transferred between the coil 47 and the rotor 30 by way of the magnetic support 56 which, together with the rotor components 39 and 40, the gap 54 and the armature 18 constitute a magnetically permeable flux path structure through which flux threads (see dashed line 55) in response to the m.m.f. which is created by the clutch coil 47 when the latter carries exciting current.

In accordance with the present invention, the clutch coil is excited initially (when a stimulating or command signal calling for clutch engagement is received) to produce a relatively high (near maximum) average m.m.f. which is sufficient to move the two co-operating members (armature and rotor) into touching contact by closure of the gap; but after the gap is closed, the excitation of the coil is rather drastically reduced and the average m.m.f. is lowered to a degree that the two contacting members may slip rather freely without transmitting appreciable torque. Then, the coil excitation and the average m.m.f. are smoothly increased up to rated values, so the slip is progessively decreased to zero and transmitted torque is progressively increased. In this fashion, the slip-and-hold chatter at the armature-rotor interface is in large measure alleviated, the objectionable noise from such chatter is reduced or eliminated, the driven load is accelerated more smoothly with less intense shocks on mechanical components, and belt "screech" is avoided in systems which employ drive belts.

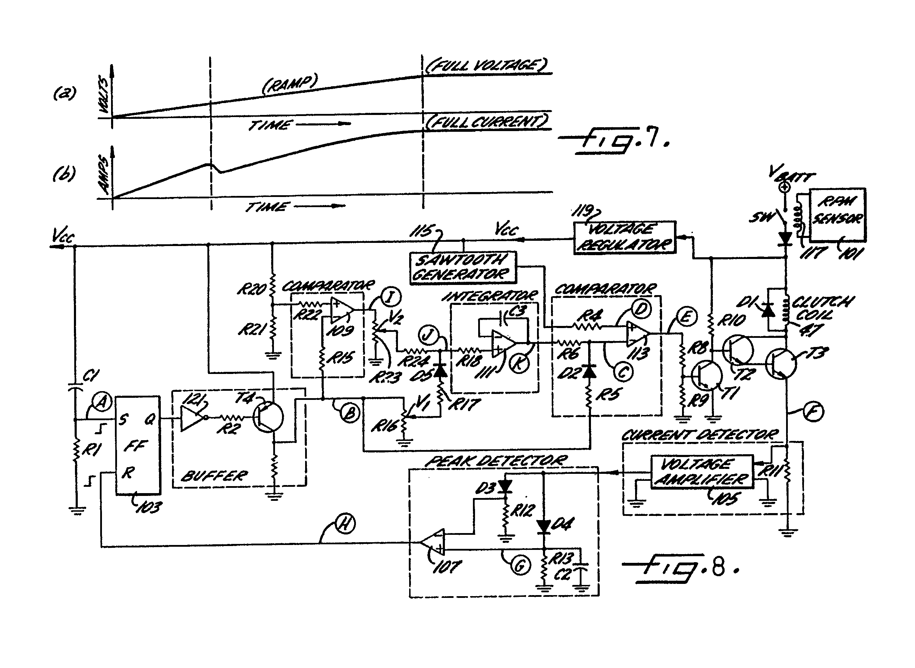

A first control unit embodying the present invention is illustrated in FIG. 5. It controls the excitation of the clutch coil 47 by current from a suitable dc. voltage source labelled $V_{BAT}$. A stimulating signal which calls for the clutch 11 to be engaged comes from an R.P.M. sensor 107' which excites a relay coil 108' to close contacts SW when the speed of the engine crankshaft 15a (FIG. 2) falls below the pre-selected speed A (FIG.3). Specifically, as a result of and after the switch SW closes, a high and near-maximum average current is applied to the clutch coil 47 for a pre-determined period of time sufficient to ensure the clutch armature 18 is drawn across the axial air gap 54 and into touching contact with the rotor 30. At the end of this predetermined time period, the "full current" pulse is changed to continue the coil excitation at an average current preferably small enough to produce maximum initial slippage, but this reduced excitation is great enough to hold the armature 18 and rotor 30 in contact. As will become apparent, the control circuit of FIG. 5 controls the duty cycle of voltage pulses applied to the clutch coil 47 and thus controls the average current energization of the coil. Therefore, by gradually increasing the duty cycle of the voltage pulses, the torque coupling between the armature 18 and rotor 30 is gradually increased, preferably over a span of about 2-1/2 to 3 seconds starting from an instant which is timed, by a preselected delay, to substantially coincide with the instant of gap closure. During that time span, the clutch members are brought smoothly from slippage at a high rate to lock-up (zero slippage).

Referring now to FIG. 5, the clutch coil or winding 47 is shown paralleled by a fly-back diode D1' which, as is known, serves to dissipate the "inductive kick" when current flowing through the coil is suddenly interrupted. The coil is connected via switch SW, when the latter is closed, in series with dc. voltage source $V_{BAT}$ and a final current control element, namely transistors T1' and T2' associated as a Darlington pair. As will become apparent, the paired transistors T1' T2' function as a solid state switch which is opened or closed when a control signal at J is respectively high or low in potential relative to the ground reference potential. If the signal at J is high, the voltage at the junction of a voltage divider formed by resistors R9' and R10' is substantially greater than ground potential, and thus the base-emitter junction of a transistor T3' is forwardly based to turn its collector-emitter path fully on. That path draws current through a resistor R11 to produce a voltage drop that places the base of transistor T1' only slightly above ground potential ---so the Darlington pair T1', T2' is turned fully off and current cannot flow from $V_{BAT}$ through the coil 47. On the other hand, if the signal at J is low, the transistor T3 is turned off, the voltage drop across resistor R11' is less, and the base-emitter junctions of the pair T1', T2'are biased full-on, so current may flow through the coil and the collector paths of the "fully closed" switch transistors T1', T2'.

The switch SW is closed in response to the appearance of a stimulating or command signal which calls for the previously disengaged clutch 11 to be engaged such that mechanical drive will take place from the armature 18 to the rotor 30. In the present example, that command signal comes as a voltage from an RPM (engine speed) sensor 107' to a relay coil 108' associated with the switch contacts SW. When the engine is above the speed A (FIG. 3) the voltage is absent; but when engine speed falls below the preselected value A, the voltage appears as a command and the contacts SW close to connect the voltage source $V_{BAT}$ to the remainder of the control circuit. This in itself does not result in current excitation of the coil 47, however, because the signal at J is initially high (for reasons to be explained) and the final control element transistors T1' T2' are cut off.

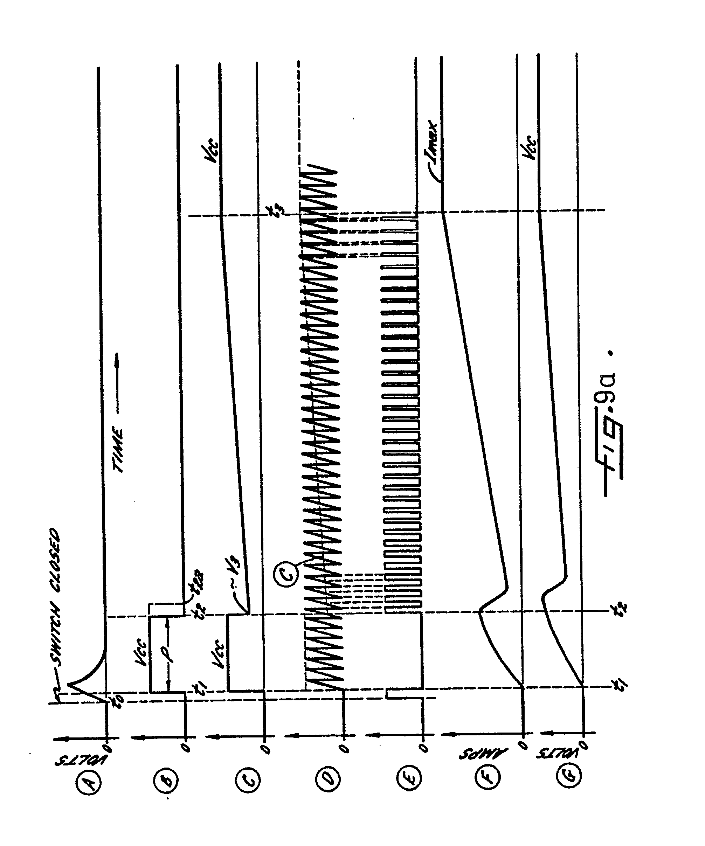

Immediately after the switch SW closes, the voltage $V_{BAT}$ is applied as an input to a conventional voltage regulator 109' whose output rises from zero to Vcc volts. The regulated voltage Vcc is constant despite minor fluctuations in the voltage $V_{BAT}$ and serves as the operating voltage source for the remainder of the control unit. The voltage Vcc is fed to a sawtooth generator 115 (per se known in the art) which immediately begins sawtooth oscillations to create an output signal I having a fairly linear sawtooth waveform (see Curve I in FIG. 6b) of a reasonably high frequency (e.g., 400 Hertz) and an amplitude only slightly less than, the magnitude of the operating voltage Vcc. The sawtooth signal I is fed via a resistor R21' to the non-inverting input (hereafter called the + input) of a high gain operational amplifier 113' which functions as a comparator. At this early point in time (just after closure of the switch SW at instant $t_0$ in FIGS. 6a, 6b), the signal H at the inverting input (hereafter, the - input) of op-amp 113' is very low and essentially at zero volts, i.e., ground potential ---for reasons to become apparent. Thus, the sawtooth input at I causes the op-amp output at J to be essentially a constant high value equal essentially to Vcc volts. This happens because signal at the + input exceeds that at the - input essentially immediately after each sawtooth ramp rises above zero volts, so that the high gain op-amp 113' goes to saturation.

When the operating voltage vcc appears at the instant $t_0$ essentially coincident with closure of the switch SW, two voltage dividers R2', R3'and R18', R19' are excited and produce at their respective juntions two voltages having respective preselected values lying between zero (ground) and Vcc. The first of those voltages produces input signal current to the + input of an operational amplifier 111' utilized as a comparator and whose output signal B thus rises to the Vcc level (see Curve B in FIG. 6a). The appearance of the operating voltage Vcc also initiates charging of a capacitor C1' through a resistor R6' (shunted by a reversely-poled diode D2' to speed up later discharge of the capacitor) so that the signal voltage A rises exponentially (as shown in FIG. 6a). When the signal at A --applied via resistor R5' to the -input of op-amp 111'-- exceeds that from the divider R2', R3'the op-amp 111' reverts to a cut-off condition and its output B falls abruptly from + Vcc to approximately zero. The R-C circuit R6', C1' taken with the op-amp 111' forms a timing device which measures off a preliminary time interval between the instants $t_0$ and $t_1$ as labeled in FIG. 6a. This preliminary interval assures that all other components, e.g., the sawtooth generator 115', have ample time to stabilize after the instant that the switch SW closes.

In accordance with one embodiment of the present invention a predetermined time period is measured off and during such period the clutch coil is energized at a relatively high level, i.e., with high exciting current sufficient to create an m.m.f. in the clutch flux path to make the armature 18 move to close the main air gap 54. The time period is measured off by a monostable multivibrator or one-shot circuit 101' triggered by the negative-going voltage transition passed through a differentiating capacitor C2 when the signal B falls at instant $t_1$. The one-shot resets after a predetermined period P and at the latter instant t2, as shown by curve C (FIG. 6a) representing the one-shot's output.

The duration of the period P is selected or predetermined (by design or adjustment of the one-shot 101') to be essentially equal to, and at least as long as, the time required for the armature 18 to move and close the gap 54 --in the particular clutch 11 with which the control unit is being used-- after the source voltage $V_{BAT}$ is applied to the clutch coil 47. When different sizes or types of clutches are to be controlled, it is a simple matter to determine such "closing time" and to appropriately adjust the one-shot 101' to change the period P.

Over the span of the period P, the signal at C passes through a resistor R8 and diode D3 to the - input of the op-amp 113'. This makes the - input signal H approximately equal to Vcc, so that the sawtooth signal at the + input never exceeds it. Therefore, the op-amp 113' is placed and remains in a cut-off condition. As shown in FIG. 6b, the signal J thus falls essentially to zero at the instant $t_1$ and so remains until the instant t2 (i.e., during the period P). Since the signal J is low, the transistor T3' is cut off and the final control element, that is, Darlington pair T1' and T2', turns steadily full on ---so the voltage $V_{BAT}$ is connected in series with the coil 47 to drive exciting current through the latter. In effect, a step voltage is applied to the coil 47. Due to the coil inductance, the current through the coil --represented at K-- rises exponentially during the period P. See curve K in FIG. 6b. At about the end (instant t2) of the period P the coil current and resulting m.m.f. in the clutch flux path have increased sufficiently to attract the armature 18, against the biasing force of the springs 50, into contact with the rotor 30.

If the exciting current and m.m.f. were left at such a high level (and recognizing that flux increases dramatically for a given m.m.f. when the air gap closes, thus causing a great decrease in flux path reluctance), the magnetic attraction force pulling the armature against the rotor would be very great. This would create, immediately upon closure of the gap, torque coupling of the two members almost equal, if not equal, to the maximum rated torque resulting from steady rated excitation current through the coil. With the inertia plus the steady resistance of the driven load, this sudden "full force" of engagement may often produce "stick-slip" or slip-and-hold chatter in the rubbing of the armature face across the rotor face. Such chatter is extremely noisy. And the sudden torque through the clutch can produce belt slippage on pulleys, with "belt screech" noise. Moreover, chatter produces increased wear on the clutch parts as compared to smooth slippage. Moreover, sudden shocks of rapid acceleration may, with repetition, mechanically damage the drive components or the driven devices.

In carrying out the invention by the embodiment shown in FIG. 5, means are provided to reduce the level of clutch energization by reducing the average coil excitation current and the average m.m.f. at about the instant that the gap closes. In the apparatus here shown, this occurs at the end, or approximately at the end, of the predetermined period P.

It is to be observed, first, that the signals B and C are fed additively via resistors R16' and R17' to the - input of an op-amp 105'. The signal D (FIG. 6a) at the - input thus is high in the time interval $t_0$ to $t_1$ because signal B is then high; and the signal D is high during the period P because the signal C is then high. Thus, between instants $t_0$ and t2 the output E from op-amp 105', and which is applied across a potentiometer R12', is essentially zero. Between the instants $t_0$ and $t_1$, the signal C applied to a potentiometer $R_1$' is essentially zero. The voltages $V_1$ and $V_2$ from those two potentiometers thus make the signal F zero between instants $t_0$ and $t_1$ (see FIG. 6a).

The signal F is applied via a resistor R15' to the + input of an op-amp 103' having a capacitor C3 connected in a negative feedback path to the - input. This creates a well-known integrator whose output signal G varies as the time integral of the signal applied to the + input. But since that input signal is essentially zero between instants $t_0$ and $t_1$, the output G remains at zero over the preliminary interval.

At the instant $t_1$, the signal C becomes essentially equal to Vcc and the voltage $V_1$ becomes some fraction thereof, say 0.7 Vcc. A diode D4' leading to resistor R15' is thus forwardly biased and conductive, so during the period P, the integrating action causes the signal G to rise with a predetermined slope, shown ideally as linear in FIG. 6a. By adjusting the potentiometer R1' to pick a value for $V_1$ and thus choose the slope in relation to the duration of the period P, the level $V_3$ of the signal G at the end of the period P can be predetermined. As will be explained, this establishes the level to which the energization or coil excitation is reduced at the end of the period P.

At the instant t2 when the signals C and $V_1$ revert to zero, the signal E rises essentially to Vcc, and the signal $V_2$ becomes some fraction thereof (say 0.1 Vcc) established by the adjustment of the potentiometer R12. The diode D4' becomes reversely biased because $V_1$ is greater than the zero value of $V_2$, so the input signal F to the integrating op-amp is determined by $V_1$. Now, the output G of the integrating op-amp 103 continues, after the end of the period p, to rise on a ramp (shown ideally as linear in FIG. 6a) whose slope is determined by the selected magnitude of the voltage $V_1$.

The ramp voltage G is fed via a resistor R22' to the - input of the comparator op-amp 113'. When the signal C falls at the end of the perid P, the diode D3 is reversely biased, so the signal at the - input of op-amp 113' is the signal G. The comparing action causes the signal J (a) to switch from Vcc to zero at those instants when the sawtooth signal drops from Vcc to zero, and (b) to switch from zero to Vcc at those instants when the rising leg of a sawtooth crosses and exceeds the then-existing level of the ramp signal G. The signal J is thus pulse-width modulated with its "on" intervals and its duty cycle becoming progressively less as the ramp signal G rises. Inasmuch as the transistor T3' is turned "on" with a progressively decreasing duty cycle, the Darlington pair T1' and T2'is turned on with a progressively increasing duty cycle. The inductance of the coil 47 acts effectively as an averaging filter when the voltage $V_{BAT}$ is applied across the coil with a progressively increasing duty cycle of pulses; in consequence, although the current through the coil varies somewhat with time, the effective average current (and the resulting average m.m.f. in the clutch flux path) rises between the instants $t_2$ and $t_3$ as illustrated by the average current Curve K in FIG. 6b.

From the foregoing, it will be seen that after the initial period p and starting at instant $t_2$, the average excitation current (Curve K) is reduced from level L1 to a lower level L2. Therefore at about the instant $t_2$ when the clutch gap closes, the full magnetic attractive force between the touching armature and rotor --and an attempt at "full coupling torque"--does not exist. Instead, the lower level L2 of average excitation current (which can be chosen by adjustment of potentiometer R1') permits the armature and rotor to slip freely relative to one another without slip-and-hold chatter. Preferably the level L2 is chosen such that when the period P ends (and the gap is closed at instant $t_2$ as shown in FIG. 6b), the m.m.f. is just enough to keep the members in contact while permitting maximum or 100% slip beween them (as shown by Curve N). This means that at instant $t_2$ the torque coupling or transmissible torque (Curve M) is essentially zero. But, of course, in many specific applications, the reduced level L2 for the average excitation current need not be made quite so low. It is to be noted, however, that at instant $t_2$ when pulse width modulation by the final transistors T1, T2 begins, their duty cycle and the average current is not zero.

Over the span between instants $t_2$ and $t_3$ - (about 2.5 to 3 seconds in one actual embodiment) the average exciting current is smoothly increased as the duty cycle of the signal J is smoothly decreased. Thus, the magnetic force pressing the armature and rotor faces together smoothly rises, the torque transmissible by friction likewise rises (Curve M) and the ratio of rotor or output speed to armature or input speed likewise rises as slip falls. By the instant $t_3$ when the ramp signal G from the integrator 103' has reached and levelled off at its maximum value, the duty cycle of the signal J is down almost to zero, and the duty cycle of the Darlington pair is almost 100% --so, in effect, the coil exciting current is almost steady and has essentially its maximum or rated value. The clutch is excited "full on" so the armature and rotor are locked and capable of transmitting rated torque.

A second control unit embodying the present invention is based upon the following observation:

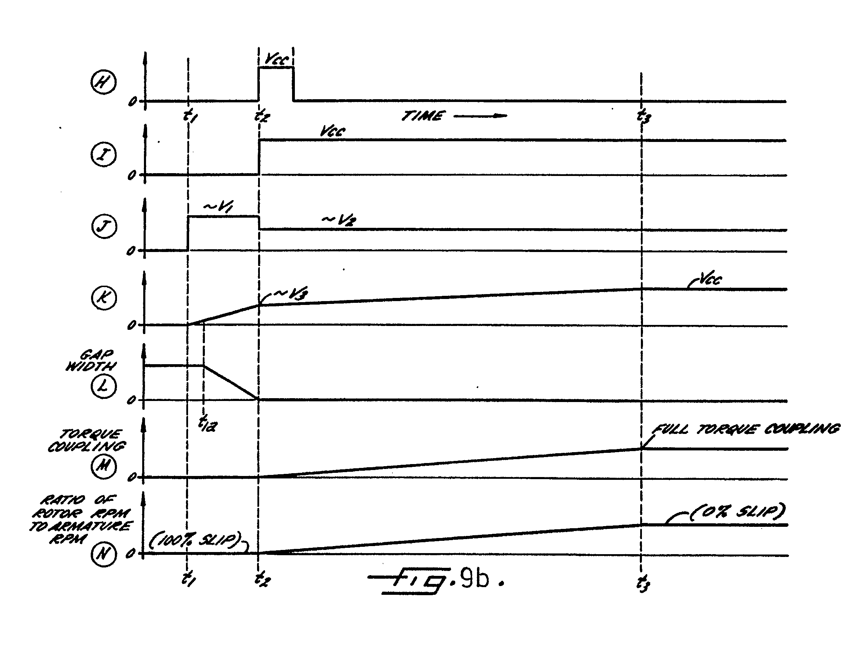

Substantially at the same instant the armature has been drawn across the armature-rotor axial air gap 54 and into contact with the rotor, the current passing through the coil experiences a slight reduction as indicated by the dip in the current waveform in FIG. 7b . This dip in the current waveform is a characteristic of all gap-type clutches. Specifically, since the total magnetic inductance of the clutch coil 47 is dependent on the nature of the flux path 55, the closing of the axial air gap 54 by movement of the armature 18 into contact with the rotor 30 causes the magnetic inductance of the coil to increase. As a result of the sudden increase in magnetic inductance from the closure of the axial air gap 54, the energization of the coil is insufficient to maintain its same current level, so the current dips temporarily while the energization of the coil adjusts to the increased magnetic inductance. Although the current waveform in FIG. 7b is shown in connection with the energization of the clutch coil 47 by a ramp voltage (FIG. 7a), the dip in the current level at the time of gap closure also occurs when the coil is energized by other energization techniques such as, for example, a step voltage.

In accordance with one important aspect of the invention, the energization of the clutch coil 47 is controlled to reduce the initial torque coupling and increase the initial slippage between the rotor 30 and armature 18 immediately after the closure of axial air gap 54 and in response to the sensing of the closure of the air gap. Preferably, the current though the clutch coil 47 is sensed by a peak detector feedback circuit which senses the dip in coil current at the time of gap closure. In response to detection of the current dip, the feedback circuit causes energization of the coil to be reduced. By providing a means for sensing the closure of the air gap between the rotor and armature, the reduction of coil energization can occur nearly simultaneously with gap closure throughout the useful life of the clutch.

Specifically, upon activation of the switch SW by the RPM sensor 101 in FIG. 8, the voltage $V_{BAT}$ from a battery source is applied to the clutch coil 47 until the coil current dips in response to the increased magnetic inductance resulting from the closure of the armature-rotor axial air gap 54. When the armature-rotor axial air gap 54 closes and the clutch coil's current dips in response, a current peak is detected and the energization of the clutch coil 47 by the voltage $V_{BAT}$ is reduced so as to lower the average m.m.f. to an initial value which is preferably small enough to achieve maximum initial slippage between the armature 18 and rotor 30. But the initial average m.m.f. after the closure of the axial air gap 54 must be great enough to prevent the armature 18 from moving away from the rotor 30 and thereby reopening the air gap. By controlling the average current energization of the clutch coil 47 and the associated m.m.f., the torque coupling between the armature 18 and rotor 30 is also controlled; preferably the torque coupling increases over an approximately 2-1/2 to 3 seconds time period after switch closure, starting from a near zero torque coupling accompanied by 100% slippage to full torque coupling accompanied by zero slippage (i.e., rotor and armature in synchronous rotation).

By utilizing operational amplifiers in comparator, integrator, peak detector and current detector configurations, the circuit of FIG. 8 combines operational amplifiers with a R-S flip-flop and a sawtooth generator to deliver a voltage signal to the base of a Darlington transistor pair in series with the clutch coil 47 which controls the average current energization of the coil in accordance with the invention. In the FIG. 8 circuit configuration the NPN transistor T1 and Darlington transistor pair T2, T3 are either off or saturated; in other words, the transistors combine to act like a switch which controls the application of the voltage $V_{BAT}$ to the clutch coil 47.

The initial controlling of the transistors after the switch SW has been closed is provided by the active Q output of R-S flip-flop 103. The active Q output of the R-S flip-flop 103 operates to hold the Darlington transistor pair T2, and T3 fully on, which thereby applies the voltage $V_{BAT}$ to the clutch coil 47. When the axial air gap 54 closes, the dip in current through the clutch coil 47 is sensed by a current detector and peak detector comprising voltage amplifier 105 and operational amplifier 107, respectively. To reduce the energization of the clutch coil 47 after closure of the axial air gap 54, the current detector and peak detector reset the R-S flip-flop 103. Thereafter, the Darlington transistor pair T2, T3 is no longer held saturated by the R-S flip-flop 103; instead, the Darlington transistor pair is pulse-width modulated by operational amplifiers 109, 111 and 113 in cooperation with sawtooth generator 115. Initially, the duty cycle of the pulses are such that the average current through the coil is reduced to an amount that results in a near zero torque coupling and an 100% armature-rotor slippage. The duty cycle is controllably increased so as to bring the clutch to full torque and 0% slippage with minimum associated noise.

When engine speed rises above the value A (FIG. 3), the switch SW in FIG. 8 opens and the clutch coil 47 is thus de-energized. The inductive kick is dissipated by current flow through a flyback diode D1. When the engine speed falls below the value A in FIG. 3, the RPM sensor 101 energizes coil 117 which closes the switch SW to connect the battery voltage source $V_{BAT}$ to the circuit in FIG. 8. In order to supply a controlled voltage $V_{cc}$ to the components in FIG. 8, a voltage regulator 119 is provided. Initially, after the switch SW is closed the NPN transistor T1 is biased to an on condition thus biasing off the Darlington transistor pair T2, T3. Accordingly, when the switch SW is closed the clutch coil 47 initially remains de-energized.

In order to start the circuit into operation, the R-S flip-flop 103 receives at its set input a voltage from a resistor-capacitor charging circuit comprising series connected capacitor C1 and resistor R1. When switch SW is closed, at time $t_0$ in the timing diagrams of FIG. 9a and 9b, the voltage regulator 119 outputs a controlled supply voltage $V_{cc}$ (e.g. 8.2 volts) to capacitor C1 and resistor R1 and also to all other active components in FIG. 8. From timing diagram A in FIG. 9a it can be seen that the voltage at the set input of the R-S flip-flop 103 rises according to a time constant defined by the RC time constant of the series connected capacitor C1 and resistor R1. At time $t_1$ in FIG. 9a, the voltage at the set input of the R-S flip-flop 103 is sufficient to cause the Q output of the flip-flop to quickly rise from near zero volts to $V_{cc}$ volts. As more clearly explained hereinafter, the rising of the voltage at the Q output of the R-S flip-flop 103 to a voltage level of $V_{cc}$ is the beginning of an initial energization pulse to the clutch coil 47 which is terminated when the armature 18 is drawn into contact with the rotor 30.

Before the voltage signal from the Q output of the R-S flip-flop 103 is delivered to the other circuit elements in FIG.8, it passes through a buffer circuit comprising inverter gate 121 and PNP transistor T4 biased by resistors R2 and R3. The buffer circuit isolates the R-S flip-flop 103 in order that the current requirement of the flip-flop is limited to that needed to drive the inverter gate 121 thus giving the overall circuit increased thermal stability.

During the time the Q output of the R-S flip-flop 103 is activated there exists at the negative input to the operational amplifier 113 a $V_{cc}$-level voltage from the flip-flop which holds the output of the amplifier at ground. The operational amplifier 113, in a comparator configuration, receives a sawtooth signal at its positive input from sawtooth generator 115 (timing diagram D in FIG. 9a) by way of a resistor 64; at its negative input it receives the buffered voltage output from the R-S flip-flop 103 (timing diagram B in FIG. 9a) by way of a resistor R5 and a diode D2. The operational amplifier 113 also receives at its negative input, by way of a resistor R6, the output voltage of an integrator-configured operational amplifier 111; as will be explained more fully hereinafter, the voltage from the operational amplifier 111 is of a lesser magnitude during time period P in FIG. 9a (between times $t_1$ and $t_2$) than the $V_{cc}$-level voltage from the R-S flip-flop 103 during the same time period. Accordingly, the voltage at the negative input of the operational amplifier 113 is at full voltage $V_{cc}$ during time period P (timing diagram C in FIG. 9a).

Since the peak voltage value of the output signal of the sawtooth generator 111 is less than or equal to a value of $V_{cc}$, the output of the operational amplifier 113 is held at a voltage close to ground for the duration of the $V_{cc}$ voltage pulse from the R-S flip-flop 103. During the time the output voltage of the operational amplifier 113 is near ground the voltage divider network composed of resistors R8 and R9 hold NPN transistor T1 in an off condition. In its off condition, the collector of the NPN transistor T1 is unbiased. This allows the resistor R10 to turn on the Darlington transistor pair T2, T3 which allows the voltage $V_{BAT}$ to initiate an inductive current in the clutch coil 47 as represented by the timing diagram F between the times $t_1$ and $t_2$. When the current reaches a point to create a sufficient flux coupling between the rotor 30 and armature 18 to draw the armature into contact with the rotor, the change in the clutch coil's magnetic inductance is sensed and the R-S flip-flop 103 is reset.

In order to reset the R-S flip-flop 103 and end the full-voltage energization of the clutch coil 47 by the voltage $V_{BAT}$, a feedback circuit comprising a current detector and a peak detector senses the increased magnetic inductance which occurs at the time the armature 18 is drawn into contact with the rotor 30. A current detector comprising a resistor R11 and the voltage amplifier 105 delivers to the peak detector a voltage signal proportional to the current in the clutch coil 47. In order to detect the closure of the axial air gap 54 between the rotor 30 and armature 18, the current detector's output is delivered to a peak detector comprising the operational amplifier 107. As explained above, when the armature-rotor axial air gap 54 is closed by the movement of the armature 18 into engagement with the rotor 30, the suddenly increased magnetic inductance causes a dip to occur in the waveform of the current through the clutch coil 47. By utilizing a peak detector in the feedback circuit, the dip in current is advantageously used to generate a signal indicating the time of rotor-armature gap closure.

In association with the current dip, there is also a current peak (i.e., where the current changes slope from increasing to decreasing); accordingly, the current detector's output signal waveform includes a voltage peak which is associated with the occurrence of the closure of the axial air gap 54. In order to detect this voltage peak, the signal to the positive input of the operational amplifier 107 is phase delayed with respect to the signal at its negative input. Specifically, the output from the current detector is delivered to the negative input of the operational amplifier 107 by way of series connected resistor R12 and diode D3; the positive input of the operational amplifier 119 receives the output of the current detector by way of a diode D4 and a charging circuit comprising a parallel-connected resistor R13 and capacitor C2. The capacitor-resistor charging circuit imposes a phase shift to the current detector's output signal delivered to the positive input of the operational amplifier 107. Because of the phase shifting, the dip in output voltage from the current detector -- which corresponds to the dip in clutch coil current at the time of the closure of the axial air gap 54 -- will appear at the negative input of the operational amplifier 107 before it will appear at the positive input of the operational amplifier.

Since the voltage to the positive input of the operational amplifier 107 (timing diagram G in FIG. 9a) is phase shifted or phase delayed, a greater voltage is at the amplifier's negative input during the time period P of rising voltage from the current detector. Therefore, the voltage output of the operational amplifier 107 remains near ground throughout the time period P. When the dip in voltage from the current detector occurs at time $t_2$, the phase-delayed voltage to the positive input of the operational amplifier 107 (timing diagram G in FIG. 9a) becomes greater than the voltage to the negative input. In response to this change at the inputs of the operational amplifier 107, the output of the amplifier transits from near ground voltage to a voltage of $V_{cc}$. This transition resets the R-S flip-flop 103 to end the voltage pulse from the Q output of the flip-flop (timing diagram B in FIG. 9a).

Since the phase of the voltage at the negative input of the operational amplifier 107 leads the phase of the voltage to the positive input of the operational amplifier (timing diagram G in FIG. 9a), when the current begins to rise again (after the current in the clutch coil has adjusted to the sudden increase in magnetic inductance at the time of closure of the axial air gap 54) the negative input to the operational amplifier again has a more positive voltage input. In response to these changes at the inputs to the operational amplifier 107, the amplifier's output voltage returns to near ground voltage.

In order to accentuate that the length of the pulse P is variable (depending on the time of gap closure), timing diagram B in FIG. 9a illustrates the pulse P alternatively lasting until times $t_2$ or $t_{2a}$. For illustration, time $t_2$ can be thought of as representing the time of gap closure for a new electromagnetic coupling where the energizing members are not yet worn and the gap 54 is small; time $t_{2a}$ can represent the time of gap closure for an electromagnetic coupling close to the end of its useful life.

At the conclusion of the pulse P from the R-S flip-flop 103 at time $t_2$, the voltage from the integrator configured operational amplifier 111 is no longer "washed out" at the negative input of the operational amplifier 113 by the higher voltage level of the pulse from the flip-flop. During the time period P of the pulse from the R-S flip-flop 103, the operational amplifier 111 has been integrating the voltage at its positive input. After the pulse from the R-S flip-flop 103 is concluded and the air gap closed, the voltage from the integrator-configured operational amplifier 111 takes control of the voltage at the negative input of the operational amplifier 113. At time $t_2$ the output voltage of the operational amplifier 111 is equal to a voltage $V_3$ - (timing diagram K in FIG. 9b). Since the sawtooth signal from the sawtooth generator 115 swings from approximately ground to a voltage level of $V_{cc}$, the output of comparator-configured operational amplifier 113 switches between a voltage level of $V_{cc}$ and ground at a frequency equal to that of the sawtooth signal and at a duty cycle proportional to the voltage from the integrating operational amplifier 111.

The buffered Q output of the R-S flip-flop 103 controls the voltage appearing at the integrating input (positive input) of the operational amplifier 111. Since the Q output of the R-S flip-flop 103 is delivered to the negative input of the operational amplifier 109 by way of the resistor R15, the active Q output causes the output of the operational amplifier 109 to be held at approximately ground voltage. Accordingly, the voltage at the center-tap wiper of resistor R23 is also ground. But the resistor R16 directly receives the pulse from the R-S flip-flop 103 so that it has a voltage $V_1$ at its center-tap wiper; therefore, the operational amplifier 111 integrates the voltage $V_1$ during time period P which it receives at its positive input from the center-tap wiper of resistor R16 by way of resistor R17, diode D5 and resistor R18.

Also at the conclusion of the pulse P from the R-S flip-flop 103 at time $t_2$, the output of the operational amplifier 109 changes from a near ground voltage to a voltage of $V_{cc}$ volts. This change occurs since the amplifier's negative input is no longer receiving a $V_{cc}$ level voltage from the R-S flip-flop 103 and the positive input of the operational amplifier is biased at a non-ground voltage by a voltage-divider network comprising resistors R20, R21 and R22. Also at the end of the pulse P from the R-S flip-flop 103 at time $t_2$, the voltage applied to resistor R16 falls to approximately ground voltage. But the resistor R23, which receives the output of the operational amplifier 109, now has a voltage $V_2$ at its center-tap wiper. From the center-tap wiper of the resistor R23, the voltage $V_2$ is received at the positive input of the operational amplifier 111 by way of resistors R24 and R18. Accordingly, the operational amplifier 111 integrates the voltage $V_1$ for the time period P and the voltage $V_2$ thereafter (timing diagram J in FIG. 9b).

Since, in its integrator configuration, the operational amplifier 111 integrates the sequential voltages $V_1$ and $V_2$, the output voltage of the amplifier has a first slope during the time period P and a second slope thereafter (timing diagram K in FIG. 9b). By design, the voltage $V_1$ is selected to be greater than the voltage $V_2$, since the purpose of the voltage integration during the time period P is to achieve a predetermined energization level of the clutch coil at time $t_2$; whereas, the purpose of the voltage $V_2$ is to provide a steadily increasing energization of the clutch coil 47 from the predetermined energization state at time $t_2$ to full energization at a time $t_3$. The operational amplifier 111 integrates the voltages $V_1$ or $V_2$ by way of a conventional integrator configuration of capacitor C3 connected in a negative-feedback arrangement.

At the conclusion of the pulse from the R-S flip-flop 103 at time $t_2$, the armature 18 has been drawn into contact with the rotor 30; initially there is preferably 100% slippage and 0% torque coupling. As stated above, when the pulse from R-S flip-flop 103 ends at time $t_2$, the ramp voltage output of the operational amplifier 111 has reached a level $V_3$ in timing diagram K. Since the voltage $V_3$ is considerably less than the peak voltage value $V_{cc}$ of the sawtooth signals from sawtooth generator 115, the output of the operational amplifier 113 (timing diagram E) alternates between a voltage level of $V_{cc}$ and ground at the frequency of the sawtooth signal and at a duty cycle determined by the voltage from the operational amplifier 111; initially the voltage $V_3$ must be sufficient to create an average current in the clutch coil 47 which holds the armature 18 in contact with the rotor 30 but preferably allows for near 100% slippage and 0% torque coupling.

It should be noted that the relationship between the frequency of the sawtooth signal and the time period P in the timing diagrams of FIGS. 9 a and 9 b is only illustrative. Preferably the frequency of the sawtooth signal is approxi mately 400 Hz. The time period P of the pulse from the R-S flip-flop 103 is determined by the time of occurrence of gap closure between the rotor 30 and armature 18 but probably is greater than 0.06 seconds. In addition, the length of the time period $t_2$ to $t_3$ in relation to the time period $t_1$ to $t_2$ is greatly compressed in order that the full transistions of the various waveforms may be shown. Preferably, the time $t_3$, which marks full voltage, full current and full torque coupling, occurs at approximately 2-1/2 to 3 seconds after switch closure.

In response to the alternating voltage at the output of the operation amplifier 113, the NPN transistor T1 is alternately turned on and off which alternately turns on and off the Darlington transistor pair T2, T3; in turn, the Darlington pair T2, T3 alternately energizes and de-energizes the clutch coil 47. From the timing diagrams C, D and E in FIG. 9a it will be appreciated by those skilled in the art of electronic circuit design that the increasing voltage from the operational amplifier 111 causes a decrease in the width of the pulses at the output of operational amplifier 113 (timing diagram E). Accordingly, as the voltage output of the operational amplifier 111 increases, the transistor T1 is held off for increasingly greater periods of time during each cycle of the sawtooth signal. As a result of the transistor T1 increasing its off-time duration, the Darlington pair T2, T3 increases its on-time duration and clutch coil 47 increases the time duration of its energized state.

As the ratio of on-time to off-time increases, the average current in the clutch coil 47 is controlled to substantially follow the current waveform in the timing diagram F of FIG. 9a. At time $t_3$ the clutch coil 47 is continuously energized and the average current has reached its full value; accordingly, at time $t_3$ the torque coupling between the rotor 30 and armature 18 has also reached full value and the rotor and armature are in synchronous rotation (0% slip).

As indicated by the timing diagram M, the gap between the rotor 30 and armature 18 is closed at time $t_2$. Although the coil 47 is first energized at time $t_1$, the armature 18 will not begin to move across the gap until time $t_{1a}$ in diagram M since sufficient m.m.f. must be available to overcome both the springs 50 (which hold the armature away from the rotor) and the inertia of the armature's mass.

By decreasing the average current energizing the clutch coil 47 at time $t_2$, the coupling torque in the timing diagram N starts at near zero and increases steadily in response to the increase in the average current energizing the coil. Similarly, the slip between the rotor 30 and armature 18 decreases from 100% to 0% as depicted by the timing diagram P in FIG. 9b; the diagram illustrates the change in time of the ratio between the rotor's RPM and the armature's RPM. It should be noted that the waveforms in timing diagrams M, N and P are not rigorous; they are idealized waveforms intended for illustrative purposes only.

In summary, the present invention brings to the art a method and apparatus for controlling gap-type electromagnetic couplings in a fashion which avoids stick-slip chatter and noise immediately following the instant at which the armature and rotor come into touching contact when the gap is closed. The high m.m.f. required to get the gap to close is created during an initial period, but the m.m.f. is then reduced so that a "soft start", with smooth but progressively decreasing slippage of the members, is obtained. Not only is clutch chatter noise and belt screech alleviated; smoother acceleration of driven loads with less shock on driving and driven components is also a yielded benefit.

## Claims

1. Method of controlling energizing of a multiple-turn winding (47) of an electromagnetic coupling (11) having an armature (18) and a rotor (30) separated by an air gap (54), said method comprising a first step of initially energizing said winding (47) by first means (101, 107, 108) designed so as to cause said armature (18) to move across said air gap (54) and into contact with said rotor (30) and - after said gap (54) has been closed - a second step of reducing the energization of said winding (47) by second means (103, 105, R1, R12) designed so as to reduce the magnetic coupling created between said armature (18) and said rotor (30) during said first initial step,

said method being **characterized** in that said second means (103, 105, R1, R12) are designed such that the reduced energization of said second step is selected so as to allow slippage between said rotor (30) and said armature (18) throughout said second step and in that energization of said winding (47) in a third step following said second step is gradually increased to full energization by third means (113, 115, C3) designed so as to provide a gradually increasing torque coupling and decrease the slippage between said armature (18) and said rotor (30).

2. The method according to claim 1, characterized in that following said second step the energization of said winding is increased to full torque coupling by pulse-width modulating the energization of said winding.

3. The method according to claims 1 or 2, characterized in that the energization of said winding is reduced, after closure of said air gap to a level which maintains gap closure but creates approximately zero torque coupling.

4. An apparatus for carrying out the method according to one of claims 1 to 3 for energizing the multiple-turn winding (47) of an electromagnetic coupling (11) having an armature (18) and a rotor (30) separated by an air gap (54), said apparatus including first means (101, 107, 108) for initially energizing said winding (47) for a period of time sufficient to build up a magnetic flux between said armature (18) and said rotor (30) so as to cause said armature (18) to move across said air gap (54) and into contact with said rotor (30) and second means (103, 105, R1, R12) for reducing the energization of said winding (47) after said gap (54) has been closed, so as to reduce the magnetic coupling created between said armature (18) and said rotor (30) during said first, initial step; said apparatus being characterized by said second means (103, 105, R1, R12) being designed so as to reduce energization of said winding (47) to a level allowing slippage between said armature (18) and said rotor (30) and further by third means (113, 115, C3) operative after the energization reduction effected by said second means (103, 105, R1, R12) for gradually increasing the energization of said winding (47) to full energization, so as to gradually increase torque coupling and decrease slippage between said armature (18) and said rotor (30).

5. The apparatus according to claim 4, characterized in that said third means (113, 115, C3) is operative to gradually increase the energization of said winding (47) until said armature (18) and rotor (30) rotate in synchronism.

6. The apparatus according to claim 4, characterized by the provision of fourth means (105, 107) for sensing the closure of said air gap (54) between said armature (18) and said rotor (30) with said second means (103, 105, R1, R12) being responsive to said fourth means.

7. The apparatus according to claim 6, characterized by said fourth means (105, 107) being responsive to the increased magnetic inductance of said winding (47) resulting from the closure of said air gap (54).

8. The apparatus according to claim 4, characterized by said second means (103, 105, R1, R12) controlling the energization of said winding (47) to reduce it to a level which produces approximately zero torque coupling between said armature (18) and said rotor (30) and 100 percent slippage between said armature (18) and rotor (30).

9. The apparatus according to claim 5, characterized by said first means including means (101) for applying a source voltage to said winding (47) for a predetermined time so that winding excitation current increases to a relatively high level sufficient to move the armature (18) across the air gap (54) and into contact with said rotor (30).

10. The apparatus according to claim 5, characterized by said second means including means (103) for reducing the average excitation current through said winding (47) to a predetermined level which holds the armature (18) and rotor (30) in contact but which produces approximately zero torque coupling between the armature and rotor.

11. The apparatus according to claim 5, characterized in that after the initial energization of said winding (47) by said first means (101, 107, 108), said second means (103, 105, R1, R12) controls the average current through said winding so as to reduce the energization of said winding (47).

12. The apparatus according to claim 10, characterized by said third means (113, 115, C3) supplying said winding (47) with an average current whose value increases in time from an initial value equal to the average current in said winding supplied by said second means to a final value equal to the steady-state rated current value for said winding.

13. The apparatus according to claim 12, characterized by including a final current control element (T1, T2, T3) in series with said winding (47) and constituting a part of said first, second and third means.

**14.** The apparatus according to claim 13, characterized in that said control element is a switch (T1, T2, T3) held closed by said first means and pulse-width modulated opened and closed by said second and third means.

**15.** The apparatus according to claim 5, characterized in that said first means (101, 107, 108) is initiated into operation by means (107) responding to a command signal calling for engagement of the electromagnetic coupling.

**16.** The apparatus according to claim 5, characterized in that said first means includes means (T1, T2, T3) for connecting a DC voltage source in series with said winding for said period of time sufficient to close said air gap (54).

**17.** The apparatus according to claim 16, characterized in that said connecting means is a final control element (T1, T2, T3) in series with said winding (47) and DC voltage source, said control element constituting a part of said first, second and third means and being operable to connect and disconnect said winding to said source.

**18.** The apparatus according to claim 17, characterized in that said final control element (T1, T2, T3) includes a solid state switch which is steadily conductive by said first means so as to conduct excitation current from said DC voltage source through said winding.

**19.** The apparatus according to claim 17, characterized in that said solid state switch is pulse-width modulated opened and closed by said second and third means so as to control the average exciting current through said winding.

**20.** The apparatus according to claim 4, characterized in that it is responsive to a command signal for energizing said multiple-turn winding (47), in that said first, second and third means are operative to control a current control element (T2) in series with said winding (47) and a DC voltage source ($V_{BAT}$) to variably control excitation current through said winding (47) said first means being responsive to the command signal for initially conditioning said control element (T2) so as to connect said winding (47) in series with said voltage source for at least a period of time sufficient for said air gap (54) to be closed and said second means conditioning said control element (T2) so as to restrict the current through said winding (47) to an average level less than that at the end of the energization of said winding controlled by said first means such that rotational slippage occurs between said first and second members and said third means for conditioning said control element (T2) so as to smoothly increase the average current through said winding (47) to a level which provides full torque coupling between said armature (18) and rotor (30).

## Revendications

**1.** Procédé de commande de l'excitation d'un enroulement multispire (47) d'un couplage électromagnétique (11) comportant un induit (18) et un rotor (30) séparés par un entrefer (54), le procédé comprenant une première étape d'excitation initiale de l'enroulement (47) par un premier moyen (101, 107, 108) configuré de manière à provoquer le mouvement de l'induit (18) au travers de l'entrefer (54) et à l'amener en contact avec le rotor (30) et - après que l'entrefer (54) a été fermé - une seconde étape de réduction de l'excitation de l'enroulement (47) par un second moyen (103, 105, R1, R12) configuré de manière à réduire le couplage magnétique créé entre l'induit (18) et le rotor (30) pendant la première étape initiale,
le procédé étant caractérisé en ce que le second moyen (103, 105, R1, R12) est configuré de telle sorte que l'excitation réduite de la seconde étape soit choisie pour permettre un glissement entre le rotor (30) et l'induit (18) au cours de la seconde étape et en ce que l'excitation de l'enroulement (47) dans une troisième étape qui suit la seconde étape augmente progressivement jusqu'à une excitation complète obtenue par un troisième moyen (113, 115, C3) configuré de manière à fournir une augmentation progressive du couplage et une diminution du glissement entre l'induit (18) et le rotor (30).

**2.** Procédé selon la revendication 1, caractérisé en ce qu'à la suite de la seconde étape, l'excitation de l'enroulement augmente jusqu'à un couplage complet par modulation en largeur d'impulsion de l'excitation de l'enroulement.

**3.** Procédé selon la revendication 1 ou 2, caractérisé en ce que l'excitation de l'enroulement est réduite après la fermeture de l'entrefer jusqu'à un niveau qui maintient la fermeture de l'entrefer mais qui crée un couplage approximativement nul.

4. Appareil pour mettre en oeuvre le procédé selon l'une des revendications 1 à 3 pour exciter l'enroulement multispire (47) d'un couplage électromagnétique (11) comportant un induit (18) et un rotor (30) séparés par un entrefer (54), l'appareil incluant un premier moyen (101, 107, 108) pour initialement exciter l'enroulement (47) pendant une période de temps suffisante pour établir un flux magnétique entre l'induit (18) et le rotor (30) de manière à forcer l'induit (18) à se déplacer au travers de l'entrefer (54) et à l'amener en contact avec le rotor (30) et un second moyen (103, 105, R1, R12) pour réduire l'excitation de l'enroulement (47) après que l'entrefer (54) a été fermé de manière à réduire le couplage magnétique créé entre l'induit (18) et le rotor (30) pendant la première étape initiale ;

l'appareil étant caractérisé en ce que :

le second moyen (103, 105, R1, R12) est configuré de manière à réduire l'excitation de l'enroulement (47) jusqu'à un niveau qui permet un glissement entre l'induit (18) et le rotor (30) et en ce qu'en outre un troisième moyen (113, 115, C3) entre en action après la réduction de l'excitation effectuée par le second moyen (103, 105, R1, R12) pour augmenter progressivement l'excitation de l'enroulement (47) jusqu'à une excitation complète de manière à augmenter progressivement le couplage et à diminuer progressivement le glissement entre l'induit (18) et le rotor (30).

5. Appareil selon la revendication 4, caractérisé en ce que le troisième moyen (113, 115, C3) est capable d'augmenter progressivement l'excitation de l'enroulement (47) jusqu'à ce que l'induit (18) et le rotor (30) tournent de manière synchronisée.

6. Appareil selon la revendication 4, caractérisé en ce qu'un quatrième moyen (105,107) est prévu pour détecter la fermeture de l'entrefer (54) entre l'induit (18) et le rotor (30), le second moyen (103, 105, R1, R12) étant sensible au quatrième moyen.

7. Appareil selon la revendication 6, caractérisé en ce que le quatrième moyen (105, 107) est sensible à l'augmentation de l'inductance magnétique de l'enroulement (47) qui résulte de la fermeture de l'entrefer (54).

8. Appareil selon la revendication 4, caractérisé en ce que le second moyen (103, 105, R1, R12) commande l'excitation de l'enroulement (47) pour la réduire jusqu'à un niveau qui produit un couplage approximativement nul entre l'induit (18) et le rotor (30) et un glissement de 100% entre l'induit (18) et le rotor (30).

9. Appareil selon la revendication 5, caractérisé en ce que le premier moyen comporte un moyen (101) pour appliquer une tension d'alimentation à l'enroulement (47) pendant une durée prédéterminée de telle sorte que le courant d'excitation de l'enroulement augmente jusqu'à un niveau relativement élevé suffisant pour déplacer l'induit (18) au travers de l'entrefer (54) et pour l'amener en contact avec le rotor (30).

10. Appareil selon la revendication 5, caractérisé en ce que le second moyen inclut un moyen (103) pour réduire le courant d'excitation moyen qui traverse l'enroulement (47) jusqu'à un niveau prédéterminé qui maintient l'induit (18) et le rotor (30) en contact mais qui produit un couplage approximativement nul entre l'induit et le rotor.

11. Appareil selon la revendication 5, caractérisé en ce qu'après l'excitation initiale de l'enroulement (47) par le premier moyen (101, 107, 108), le second moyen (103, 105, R1, R12) commande le courant moyen qui traverse l'enroulement de manière à réduire l'excitation de l'enroulement (47).

12. Appareil selon la revendication 10, caractérisé en ce que le troisième moyen (113, 115, C3) alimente l'enroulement (47) avec un courant moyen dont la valeur augmente au cours du temps depuis une valeur initiale égale au courant moyen qui circule dans l'enroulement et qui est appliqué par le second moyen jusqu'à une valeur finale égale à la valeur nominale du courant dans l'enroulement à l'état stabilisé.

13. Appareil selon la revendication 12, caractérisé en ce qu'il comprend un élément de commande de courant final (T1, T2, T3) qui est monté en série avec l'enroulement (47) et qui constitue une partie des premier, second et troisième moyens.

14. Appareil selon la revendication 13, caractérisé en ce que l'élément de commande est un commutateur (T1, T2, T3) maintenu fermé par le premier moyen et modulé en largeur d'impulsion, qui est ouvert et fermé par les second et troisième moyens.

15. Appareil selon la revendication 5, caractérisé en ce que le premier moyen (101, 107, 108) est mis en fonctionnement par un moyen (107) qui répond à un signal de commande qui commande l'engagement du couplage électromagnétique.

16. Appareil selon la revendication 5, caractérisé en ce que le premier moyen inclut un moyen (T1, T2, T3) pour connecter une source de tension continue en série avec l'enroulement pendant la période de temps suffisante pour fermer l'entrefer (54).

17. Appareil selon la revendication 16, caractérisé en ce que le moyen de connexion est un élément de commande final (T1, T2, T3) monté en série avec l'enroulement (47) et la source de tension continue, l'élément de commande constituant une partie des premier, second et troisième moyens et pouvant fonctionner pour connecter et déconnecter l'enroulement de la source.

18. Appareil selon la revendication 17, caractérisé en ce que l'élément de commande final (T1, T2, T3) comporte un commutateur à l'état solide qui est rendu conducteur à l'état stabilisé par le premier moyen de manière à conduire le courant d'excitation depuis la source de tension continue au travers de l'enroulement.

19. Appareil selon la revendication 17, caractérisé en ce que le commutateur à l'état solide est modulé en largeur d'impulsion et est ouvert et fermé par les second et troisième moyens de manière à commander le courant d'excitation moyen au travers de l'enroulement.

20. Appareil selon la revendication 4, caractérisé en ce qu'il est sensible à un signal de commande pour exciter l'enroulement multispire (47), en ce que les premier, second et troisième moyens peuvent être actionnés pour commander un élément de commande de courant (T2) monté en série avec l'enroulement (47) et avec une source de tension continue (V$_{BAT}$) pour commander de manière variable le courant d'excitation qui traverse l'enroulement (47), le premier moyen étant sensible au signal de commande pour conditionner initialement l'élément de commande (T2) de manière à connecter l'enroulement (47) en série avec la source de tension pour au moins une période de temps suffisante pour que l'entrefer (54) se ferme et le second moyen conditionnant l'élément de commande (T2) de manière à limiter le courant qui traverse l'enroulement (47) jusqu'à un niveau moyen inférieur à celui qui existe à la fin de l'excitation de l'enroulement commandée par le premier moyen de telle sorte qu'un glissement en rotation se produise entre les premier et second éléments et le troisième moyen pour conditionner l'élément de commande (T2) de manière à augmenter en douceur le courant moyen qui traverse l'enroulement (47) jusqu'à un niveau qui assure un couplage complet entre l'induit (18) et le rotor (30).

## Ansprüche

1. Verfahren zum Steuern der Energiezufuhr zu einer mehrere Windungen aufweisenden Wicklung (47) einer elektromagnetischen Kupplung (11), welche einen Anker (18) und einen Rotor (30) besitzt, die durch einen Luftspalt (54) getrennt sind, wobei das Verfahren einen ersten Schritt umfaßt, gemäß welchem zunächst eine Energiezufuhr zu der Wicklung (47) mittels erster Einrichtungen (101, 107, 108) erfolgt, die so ausgestaltet sind, daß sie bewirken, daß sich der Anker (18) über den Luftspalt (54) hinweg und in Kontakt mit dem Rotor (30) bewegt und - nachdem der Spalt (54) geschlossen worden ist - einen zweiten Schritt, gemäß welchem die Energiezufuhr für die Wicklung (47) mittels zweiter Einrichtungen (193, 105, R1, R12) reduziert wird, die so ausgebildet sind, daß die magnetische Kopplung, welche zwischen dem Anker (18) und dem Rotor (30) während des ersten anfänglichen Schrittes geschaffen wurde, verringert wird, wobei das Verfahren **dadurch gekennzeichnet** ist, daß die zweiten Einrichtungen (103, 105, R1, R12) so ausgebildet sind, daß die verringerte Energiezufuhr während des zweiten Schrittes so gewählt wird, daß für die gesamte Dauer des zweiten Schrittes ein Schlupf zwischen dem Rotor (30) und dem Anker (18) gestattet wird und daß die Energiezufuhr zu der Wicklung (47) während eines dritten Schrittes, welcher auf den zweiten Schritt folgt, allmählich bis zur vollen Energiezufuhr mittels dritter Einrichtungen (113, 115, C3) erhöht wird, die so ausgebildet sind, daß sie für eine allmähliche Zunahme der Drehmomentkopplung und eine (allmähliche) Abnahme des Schlupfes zwischen dem Anker (18) und dem Rotor (30) sorgen.

2. Verfahren nach Anspruch 1, dadurch gekennzeichnet, daß im Anschluß an den zweiten Schritt die Energiezufuhr zu der Wicklung durch Pulsweiten-Modulation der Energiezufuhr zu der Wicklung bis zum Erreichen der vollen Drehmomentkopplung erhöht wird.

3. Verfahren nach Anspruch 1 oder 2, dadurch gekennzeichnet, daß die Energiezufuhr zu der Wicklung nach dem Schließen des Luftspalts auf ein Niveau verringert wird, welches den geschlossenen Zustand des Spalts aufrechterhält, aber näherungsweise eine Drehmomentkopplung von Null schafft.

4. Vorrichtung zur Durchführung des Verfahrens nach einem der Ansprüche 1 bis 3 zur Energiezufuhr zu der mehrere Windungen aufweisenden Wicklung (47) einer elektromagnetischen Kupplung (11) mit einem Anker (18) und einem Rotor (30), die durch einen Luftspalt (54) getrennt sind, wobei die Vorrichtung erste Einrichtungen (101, 107, 108) zur anfänglichen Energiezufuhr zu der Wicklung (47) für ein Zeitintervall umfaßt, welches ausreicht, um zwischen dem Anker (18) und dem Rotor (30) einen solchen magnetischen Fluß aufzubauen, daß bewirkt wird, daß sich der Anker (18) über den Luftspalt (54) hinweg und in Kontakt mit dem Rotor (30) bewegt, sowie zweite Einrichtungen (103, 195, R1, R12) zum Verringern der Energiezufuhr zu der Wicklung (47), nachdem der Spalt (54) geschlossen worden ist, um so die während des ersten, anfänglichen Schrittes zwischen dem Anker (18) und dem Rotor (30) geschaffene magnetische Kopplung zu verringern;
wobei die Vorrichtung **dadurch gekennzeichnet** ist, daß die zweiten Einrichtungen (103, 105, R1, R12) so ausgebildet sind, daß sie die Energiezufuhr zu der Wicklung (47) bis auf ein Nineau reduzieren, welches einen Schlupf zwischen dem Anker (18) und dem Rotor (30) gestattet, und daß ferner dritte Einrichtungen (113, 115, C3) vorgesehen sind, welche nach der von den zweiten Einrichtungen (103, 105, R1, R12) bewirkten Reduzierung der Energiezufuhr tätig sind, um die Energiezufuhr zu der Wicklung (47) allmählich bis zur vollen Energiezufuhr zu erhöhen, derart, um die Drehmomentkopplung allmählich zu erhöhen und den Schlupf zwischen dem Anker (18) und dem Rotor (30) (allmählich) zu verringern.

5. Vorrichtung nach Anspruch 4, dadurch gekennzeichnet, daß die dritten Einrichtungen (113, 115, C3) derart arbeiten, daß sie die Energiezufuhr zu der Wicklung (47) allmählich erhöhen, bis sich der Anker (18) und der Rotor (30) synchron drehen.

6. Vorrichtung nach Anspruch 4, dadurch gekennzeichnet, daß vierte Einrichtungen (105, 107) zum Erfassen des Schließens des Luftspalts (54) zwischen dem Anker (18) und dem Rotor (30) vorgesehen sind, wobei die zweiten Einrichtungen (103, 105, R1, R12) auf diese vierten Einrichtungen ansprechen.

7. Vorrichtung nach Anspruch 6, dadurch gekennzeichnet, daß die vierten Einrichtungen (195, 107) auf die erhöhte magnetische Induktivität der Wicklung (47) ansprechen, die sich aufgrund des Schließens des Luftspalts (54) ergibt.

8. Vorrichtung nach Anspruch 4, dadurch gekennzeichnet, daß die zweiten Einrichtungen (103, 105, R1, R12) die Energiezufuhr zu der Wicklung (47) derart steuern, daß sie auf ein Niveau reduziert wird, welches annähernd die Drehmomentkopplung Null zwischen dem Anker (18) und dem Rotor (30) erzeugt und einen hundertprozentigen Schlupf zwischen dem Anker (18) und dem Rotor (30).

9. Vorrichtung nach Anspruch 5, dadurch gekennzeichnet, daß die ersten Einrichtungen Einrichtungen (101) umfassen, um für eine vorgegebene Zeit eine Quellenspannung an die Wicklung (47) anzulegen, derart, daß der Erregerstrom der Wicklung auf ein relativ hohes Niveau ansteigt, welches ausreicht, um den Anker (18) über den Luftspalt (54) hinweg und in Kontakt mit dem Rotor (30) zu bewegen.

10. Vorrichtung nach Anspruch 5, dadurch gekennzeichnet, daß die zweiten Einrichtungen Einrichtungen (103) umfassen, um den mittleren Erregerstrom durch die Wicklung (47) auf ein vorgegebenes Niveau zu reduzieren, bei welchem der Anker (18) und der Rotor (30) in Kontakt gehalten werden, bei dem aber zwischen dem Anker und dem Rotor eine Drehmomentkopplung von nahezu Null erzeugt wird.

11. Vorrichtung nach Anspruch 5, dadurch gekennzeichnet, daß nach der anfänglichen Energiezufuhr zu der Wicklung (47) mit Hilfe der ersten Einrichtungen (101, 107, 108) die zweiten Einrichtungen (103, 105, R1, R12) den mittleren Strom durch die Wicklung derart steuern, daß die Energiezufuhr zu der Wicklung (47) reduziert wird.

12. Vorrichtung nach Anspruch 10, dadurch gekennzeichnet, daß die dritten Einrichtungen (113, 115, C3) die Wicklung (47) mit einem mittleren Strom versorgen, dessen Wert mit der Zeit von einem Anfangswert, der gleich dem mittleren Strom in der Wicklung ist, der von den zweiten Einrichtungen geliefert wird, auf einen Endwert ansteigt, der gleich dem Nennstromwert für die Wicklung im stetigen (eingekuppelten) Zustand ist.

13. Vorrichtung nach Anspruch 12, dadurch gekennzeichnet, daß sie ein den Endwert des Stroms steuerndes Element (T1, T2, T3) in Serie zu der Wicklung (47) umfaßt, welches einen Bestandteil der ersten, zweiten und dritten Einrichtungen bildet.

14. Vorichtung nach Anspruch 13, dadurch gekennzeichnet, daß das Steuerelement ein Schalter (T1, T2, T3) ist, welcher durch die ersten Einrichtungen im geschlossenen Zustand gehalten wird und welcher durch die zweiten und dritten Einrichtungen zur Pulsweiten-Modulation geöffnet und geschlossen wird.

15. Vorrichtung nach Anspruch 5, dadurch gekennzeichnet, daß die ersten Einrichtungen (101, 107, 108) zum Betrieb durch Einrichtungen (107) aktiviert werden, die auf ein Befehlssignal ansprechen, durch welches das Einkuppeln der elektromagnetischen Kupplung aufgerufen wird.

16. Vorrichtung nach Anspruch 5, dadurch gekennzeichnet, daß die ersten Einrichtungen Verbindungseinrichtungen (T1, T2, T3) umfassen, um eine Gleichspannungsquelle für ein Zeitinterval in Serie zu der Wicklung zu schalten, welches ausreicht, um den Luftspalt (54) zu schließen.

17. Vorrichtung nach Anspruch 16, dadurch gekennzeichnet, daß die Verbindungseinrichtungen aus einem End-Steuerelement (T1, T2, T3) bestehen, welches in Serie zu der Wicklung (47) und der Gleichspannungsquelle liegt, wobei das Steuerelement einen Bestandteil der ersten, der zweiten und der dritten Einrichtungen bildet und betätigbar ist, um die Wicklung mit der Quelle zu verbinden und sie von dieser zu trennen.

18. Vorrichtung nach Anspruch 17, dadurch gekennzeichnet, daß das End-Steuerelement (T1, T2, T3) einen Festkörperschalter umfaßt, welcher durch die ersten Einrichtungen ständig im leitenden Zustand gehalten wird, so daß er den Erregerstrom von der Gleichstromquelle durch die Wicklung leitet.

19. Vorrichtung nach Anspruch 17, dadurch gekennzeichnet, daß der Festkörperschalter nach dem Verfahren der Pulsweiten-Modulation durch die zweiten und die dritten Einrichtungen geöffnet und geschlossen wird, um den mittleren Erregerstrom durch die Wicklung zu steuern.

20. Vorrichtung nach Anspruch 4, dadurch gekennzeichnet, daß sie auf ein Befehlssignal anspricht, um der mehrere Windungen aufweisenden Wicklung (47) Energie zuzuführen, daß die ersten, die zweiten und die dritten Einrichtungen derart arbeiten, daß sie ein Stromsteuerelement (T2) steuern, welches in Serie zu der Wicklung (47) und einer Gleichspannungsquelle ($V_{BAT}$) liegt, um den Erregerstrom durch die Wicklung (47) variabel zu steuern, wobei die ersten Einrichtungen auf das Befehlssignal ansprechen, um das Steuerelement (T2) zu Anfang so zu konditionieren, daß es die Wicklung (47) zumindest für ein Zeitintervall in Serie zu der Spannungsquelle schaltet, das ausreicht, um den Luftspalt (54) zu schließen, und daß die zweiten Einrichtungen das Steuerelement (T2) derart konditionieren, daß es den Strom durch die Wicklung (47) auf ein mittleres Niveau begrenzt, welches geringer ist als am Ende der Erregung der Erregerwicklung, und zwar unter Steuerung durch die ersten Einrichtungen derart, daß zwischen den ersten und zweiten Elementen ein Drehschlupf auftritt und daß die dritten Einrichtungen das Steuerelement (T2) derart konditionieren, daß es den mittleren Strom durch die Wicklung (47) gleichmäßig auf ein Niveau erhöht, welches für eine volle Drehmomentkopplung zwischen dem Anker (18) und dem Rotor (30) sorgt.

Fig.1.

Fig.3.

Fig.4.

Fig.2.

Fig.5.

EP 0 154 834 B1

FIG. 62.

FIG. 6b.

Fig.7.

Fig.8.

FIG.9a.

Fig.9b.